# EUROPEAN PATENT APPLICATION

(11) **EP 2 429 201 A2**
(43) Date of publication of application: **14.03.2012**
(21) Application number: 11161058.0
(22) Date of filing: 04.04.2011
(51) Int. Cl.: H04N 13/00

(54) **Display apparatus and method of controlling the same, shutter glasses and method of controlling the same, and display system**

(30) Priority: 08.09.2010 KR 20100087802
(71) Applicant: SAMSUNG ELECTRONICS CO., LTD., Suwon-si Gyeonggi-do 442-742 (KR)
(72) Inventor: Lim, Sang-min, Seoul (KR); Choi, Young-ho, Gyeonggi-do (KR)
(74) Representative: Clark, David James

(57) **Abstract**

A display apparatus to display a three-dimensional image (3D) and a method of controlling the same, shutter glasses and a method of controlling the same, and a display system are provided. The shutter glasses include a lens which allows selective light transmission; a signal receiver which receives a first signal; a synchronization signal reconstruction unit which reconstructs a synchronization signal corresponding to a 3D display of the display apparatus through a correlation analysis on the received first signal; and a shutter driver which operates the lens corresponding to the synchronization signal reconstructed by the synchronization signal reconstruction unit.

## Description

### BACKGROUND

### 1. Field

Apparatuses and methods consistent with exemplary embodiments relate to a display apparatus to display a three-dimensional (3D) image and a method of controlling the same, shutter glasses and a method of controlling the same, and a display system, and more particularly, to a display apparatus which includes noise filtering with respect to a synchronization signal transmitted from the display apparatus to shutter glasses so that the shutter glasses operates corresponding to an image displayed by the display apparatus, a method of controlling the same, shutter glasses a method of controlling the same, and a display system.

### 2. Description of the Related Art

In a related art display system, a display apparatus processes an image signal input from an external image source and displays as an image on a display panel configured as a liquid crystal display. The display apparatus scans scan lines including image information on the panel to display the image on the panel. Accordingly, the scanned scan lines are sequentially arranged on the panel to constitute one image frame.

An image displayed by the display apparatus is classified into a two-dimensional (2D) image and a 3D image. The eyes of a user have different viewing angles, and thus the user perceives a 3D representation of an object. Accordingly, a 3D image is displayed on the display apparatus, being divided into a left image and a right image, and the display system includes 3D glasses which perform selective light transmission with respect to the eyes of the user accordingly. The 3D glasses are configured as shutter glasses to selectively transmit light based on whether voltage is applied, or polarizing glasses to transmit light in a preset polarized direction.

When the 3D glasses are configured as shutter glasses, the display apparatus generates and transmits a synchronization signal corresponding to the 3D image to the shutter glasses, and the shutter glasses operate based on the synchronization signal received from the display apparatus to selectively perform image transmission with respect to the eyes of the user.

### SUMMARY

Accordingly, one or more exemplary embodiments provide a display apparatus, and a method of controlling the same.

According to an aspect of an exemplary embodiment, there is provided shutter glasses configured to communicate with a display apparatus displaying a 3D image, the shutter glasses including: a lens which selectively transmits light; a signal receiver which receives a first signal; a synchronization signal reconstruction unit which reconstructs a synchronization signal corresponding to a 3D display of the display apparatus through a correlation analysis on the received first signal; and a shutter driver which operates the lens corresponding to the synchronization signal reconstructed by the synchronization signal reconstruction unit.

The first signal may be a code signal having orthogonality.

The first signal may be a pseudo-noise code signal.

The first signal may be an infrared signal.

According to an aspect of another exemplary embodiment, there is provided a display apparatus including: an image receiver which receives an image signal corresponding to a 3D image; an image processor which processes the image signal so that an image is displayed on a display unit; a communication unit which communicates with shutter glasses to operate corresponding to the displayed image; and a synchronization signal processor which converts a synchronization signal corresponding to a 3D display into a code signal having orthogonality and to transmit the code signal to the communication unit.

The code signal may be a pseudo-noise code signal.

The communication unit may communicate with the shutter glasses using an infrared signal.

According to an aspect of another exemplary embodiment, there is provided a display apparatus including: an image receiver which receives an image signal corresponding to a 3D image; an image processor which processes the image signal so that an image is displayed on a display unit; a communication unit which communicates with shutter glasses to operate corresponding to the displayed image; and a synchronization signal processor which generates a synchronization signal in which a noise code having a repeated pattern and orthogonality is formed corresponding to a vertical synchronization range of the image signal, and transmits the synchronization signal to the communication unit so that the shutter glasses reconstructs the vertical synchronization range in the synchronization signal range based on the noise code.

The noise code may include a PN code.

The communication unit may transmit the synchronization signal to the shutter glasses based on an infrared communication scheme.

Aspects may also be achieved by providing shutter glasses to communicate with a display apparatus displaying a3D image, the shutter glasses including: a lens which transmits light selectively; a signal receiver which receives, from the display apparatus, a synchronization signal in which a noise code having a preset repeated pattern and orthogonality is formed in a vertical synchronization range of the displayed image; a synchronization signal reconstruction unit which predesignates the noise code therein and reconstructs the vertical synchronization range in the synchronization signal received by the signal receiver based on the noise code; and a shutter driver which operates the lens corresponding to the synchronization signal reconstructed by the synchronization signal reconstruction unit.

The noise code may include a PN code.

The synchronization signal reconstruction unit may perform an analysis of a correlation between the synchronization signal and the noise code, and determines a range where the noise code is formed as the vertical synchronization range based on a result of the analysis.

The synchronization signal reconstruction unit may determine a range of the synchronization signal as the vertical synchronization range when a correlation of the range and the noise code is at least a level.

The signal receiver may receive the synchronization signal from the display apparatus based on an infrared communication scheme.

According to an aspect of another exemplary embodiment, there is provided a method of controlling a display apparatus including: receiving an image signal corresponding to a 3D image; displaying an image based on the received image signal; generating a synchronization signal in which a noise code having a pattern and orthogonality is formed corresponding to a vertical synchronization range of the image signal; and transmitting the synchronization signal to shutter glasses so that the shutter glasses reconstruct the vertical synchronization range in the synchronization signal range based on the noise code, the shutter glasses operating corresponding to the displayed image.

The noise code may include a PN code.

According to an aspect of another exemplary embodiment, there is provided a method of controlling shutter glasses which communicates with a display apparatus to display a 3D image and includes a lens to transmit light selectively corresponding to the 3D image, the method including: predesignating a noise code having a preset repeated pattern and orthogonality; receiving, from the display apparatus, a synchronization signal in which the noise code is formed in a vertical synchronization range of the displayed image, and reconstructing the vertical synchronization range in the received synchronization signal based on the noise code; and operating the lens corresponding to the vertical synchronization range reconstructed synchronization signal.

The noise code may include a PN code.

The reconstructing the vertical synchronization range may include performing an analysis of a correlation between the synchronization signal and the noise code, and determining a range where the noise code is formed as the vertical synchronization range based on a result of the analysis.

The determining the range where the noise code is formed as the vertical synchronization range may include determining a range of the synchronization signal as the vertical synchronization range when a correlation of the range and the noise code is at least a preset level.

According to an aspect of another exemplary embodiment, there is provided a display system including: a display apparatus which displays a 3D image based on a 3D image signal; and shutter glasses which comprises a lens that transmits light selectively, and operates the lens corresponding to the displayed image, the display apparatus generating a synchronization signal in which a noise code having a pattern and orthogonality is formed corresponding to a vertical synchronization range of the image signal, and transmitting the synchronization signal to the shutter glasses, and the shutter glasses reconstructing the vertical synchronization range in the synchronization signal received from the display apparatus based on the noise code, and operating the lens corresponding to the reconstructed synchronization signal.

The noise code may include a pseudo-noise PN code.

The shutter glasses may perform an analysis of a correlation between the received synchronization signal and the noise code, and determine a range where the noise code is formed as the vertical synchronization range based on a result of the analysis.

The shutter glasses may determine a range of the synchronization signal as the vertical synchronization range when a correlation of the range and the noise code is at least a preset level.

The display apparatus may transmit the synchronization signal to the shutter glasses based on an infrared communication scheme.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates an example of a display system according to an exemplary embodiment;
FIG. 2 is a block diagram of the exemplary display system of FIG. 1;
FIG. 3 illustrates that the exemplary display system of FIG. 1 generates and reconstructs a synchronization signal based on a noise code;
FIG. 4 is a graph illustrating an example of an analysis result of a correlation between received synchronization signals in shutter glasses of FIG. 1;
FIG. 5 is a flowchart illustrating a method of controlling a display apparatus of FIG. 1 according to an exemplary embodiment; and
FIG. 6 is a flowchart illustrating a method of controlling the shutter glasses of FIG. 1 according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

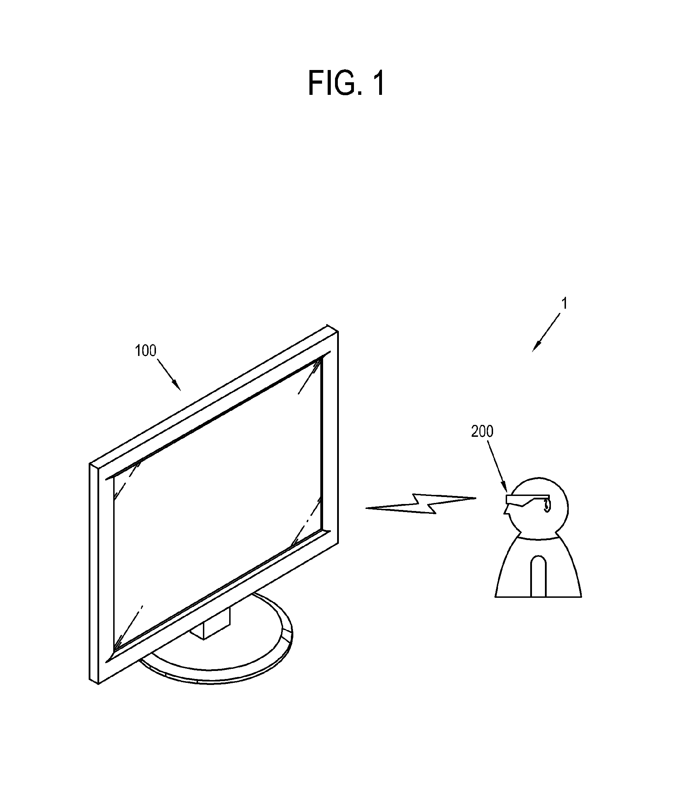

FIG. 1 illustrates an example of a display system 1 according to an exemplary embodiment. including a display apparatus 100 to process an image signal input from an outside and to display an image, and shutter glasses 200 to selectively transmit or block light accordingly when an image displayed by the display apparatus 100 is a 3D image.

The display apparatus 100 receives an image signal from an external image source (not shown). The display apparatus 100 may receive an image signal from various image sources, including but not limited to, a computer (not shown) including a CPU (not shown) and a graphic card (not shown) to generate and locally provide an image signal, a server (not shown) to provide an image signal via a network, and a transmitting device (not shown) of a broadcasting station to transmit a broadcasting signal using airwaves or cable networks. Other equivalent structures as would be understood by those skilled in the art may be substituted therefore without departing from the scope of the invention.

The display apparatus 100 receives a 2D image signal corresponding to a 2D image or a 3D image signal corresponding to a 3D image from an outside and processes the signals to display. Here, unlike the 2D image, the 3D image includes a left image frame corresponding to a left eye of a user and a right image frame corresponding to a right eye of the user. When the 3D image signal is received, the display apparatus 100 alternately displays the left image frame and the right image frame based on the signal.

When the 3D image is displayed on the display apparatus 100, the shutter glasses 200 selectively open or close the view with respect to the left eye or the right eye of the user, corresponding to whether either the left image frame or the right frame image is currently displayed. That is, when the left image frame is displayed on the display apparatus 100, the shutter glasses 200 open the view for the left eye of the user and close the view for the right eye. When the right image frame is displayed on the display apparatus 100, the shutter glasses 200 open the view for the right eye and close the view for the left eye.

In order for the 3D image displayed on the display apparatus 100 to correspond to a selective light transmission/light blocking operation of the shutter glasses 200, the display apparatus 100 generates a synchronization signal corresponding to a display timing of an image frame and transmits the signal to the shutter glasses 200, and the shutter glasses 200 operates based on the received synchronization signal.

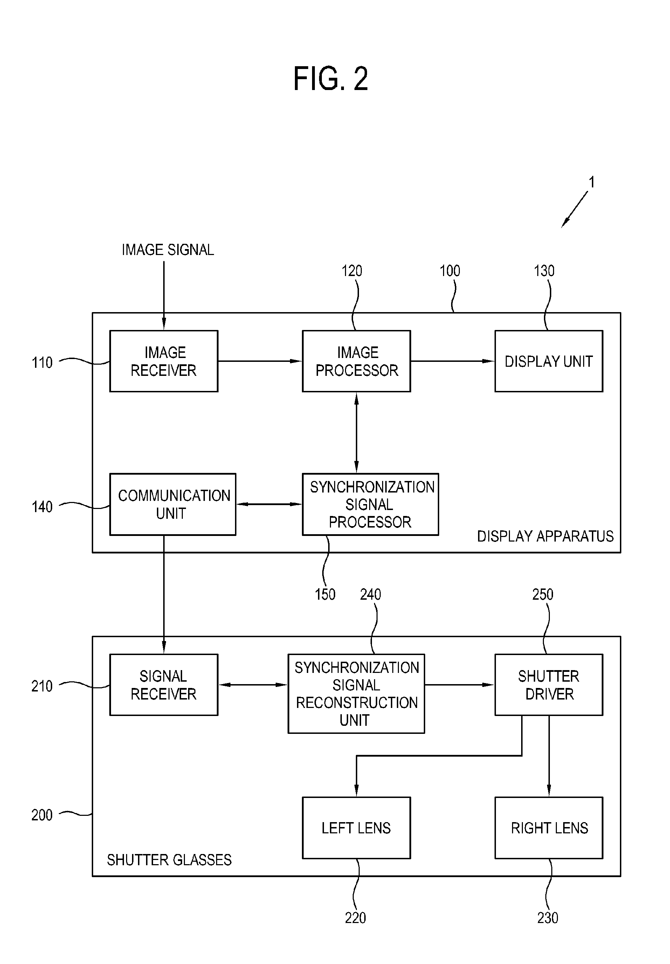

Hereinafter, a configuration of the display apparatus 100 and a configuration of the shutter glasses 200 will be described with reference to FIG. 2. FIG. 2 is a block diagram illustrating a control relation between the display apparatus 100 and the shutter glasses 200 according to an exemplary embodiment. The display apparatus 100 includes an image receiver 110 to receive an image signal, an image processor 120 to process an image signal received by the image receiver 110, a display unit 130 to display an image signal processed by the image processor 120 as an image, a communication unit 140 to communicate with the shutter glasses 200, and a synchronization signal processor 150 to generate a corresponding driving signal when a 3D image is displayed on the display unit 130, and to transmit the signal through the communication unit 140.

The shutter glasses 200 includes a signal receiver 210 to communicate with the communication unit 140 and to receive a synchronization signal, a left lens 220 and a right lens 230 to respectively perform light transmission/light blocking with respect to left eye and the right eye of the user, a synchronization signal reconstruction unit 240 to reconstruct a synchronization signal received by the signal receiver 210 to be used in the shutter glasses 200, and a shutter driver 250 to operate the left lens 220 and the right lens 230 based on a synchronization signal reconstructed by the synchronization signal reconstruction unit 240.

The display system 1 having the above configuration according to the present exemplary embodiment operates as follows. To generate a synchronization signal, the synchronization signal processor 150 of the display apparatus 100 forms an orthogonal noise code (e.g., predesignated) having a pattern (e.g., preset repeated pattern) corresponding to a vertical synchronization range of an image signal. When the synchronization signal is received from the display apparatus 100, the shutter glasses 200 reconstruct the vertical synchronization range in the received synchronization signal based on the noise code.

Accordingly, even though additional noise is mixed with the synchronization signal while the synchronization signal is transmitted from the display apparatus 100 to the shutter glasses 200, the shutter glasses 200 may filter the noise and determine the vertical synchronization range. Thus, malfunction of the shutter glasses 200 which may occur when noise is mixed with the synchronization signal, for example, unsynchronization of shutter operations of the left lens 220 and the right lens 230 with a display timing of an image on the display apparatus 100, may be prevented.

The noise code formed corresponding to the vertical synchronization range of the synchronization signal will be described.

Hereinafter, components of the display apparatus 100 are described.

The image receiver 110 receives an image signal to transmit to the image processor 120, and may be configured in various types corresponding to a standard of the received image signal and a form of the display apparatus 100.

For example but not by way of limitation, when the display apparatus 100 is a television (TV), the image receiver 110 receives a radio frequency (RF) signal transmitted from a broadcasting station (not shown) wirelessly or image signals in composite video, component video, super video, SCART (Syndicat francais des Constructeurs d'Appareils Radio et Television), and high definition multimedia interface (HDMI) standards through a cable. When an image signal is a broadcast signal, the image receiver 110 includes a tuner to tune the broadcast signal for each broadcast channel.

When the display apparatus 100 is a computer monitor, the image receiver 110 may be configured in a D-subminiature (D-SUB) standard to transmit red, green, and blue (RGB) signals based on a video graphics array (VGA) format, digital video interface (DVI) standards including DVI-analog (DVI-A), DVI-integrated digital/analog (DVI-I), and DVI-digital (DVI-D), a high-definition multimedia interface (HDMI) standard, and the like. Alternatively, the image receiver 110 may be configured as a DisplayPort, unified display interface (UDI), or wireless HD standard. Other equivalent configurations as would be known by one in the art may be substituted therefor without departing from the scope of the invention.

The image processor 120 performs various types of image processing (e.g., preset) on an image signal. The image processor 120 performs image processing to output the image signal to the display unit 130, so that an image is displayed on the display unit 130.

For example but not by way of limitation, the image processor 120 may perform, but it not limited to, decoding and encoding corresponding to various image formats, de-interlacing, frame refresh rate conversion, scaling, noise reduction to improve image quality, detail enhancement, and line scanning. The image processor 120 may be provided as a separate component to independently conduct each process or an integrated component which is multifunctional.

The image processor 120 processes an image signal into a plurality of horizontal scan lines for each frame and scans the lines to the display unit 130. The image processor 120 scans an image from an upper side to a lower side of a display region of the display unit 130. When scanning for one frame is completed, the image processor 120 scans an image for a subsequent frame after a period (e.g., preset) of non-scanning time, that is, a vertical synchronization range.

When an image signal corresponding to a 3D image is transmitted from the image receiver 110, the image processor 120 alternately scans an image signal corresponding to a left image frame and an image signal corresponding to a right image frame to the display unit 130. Accordingly, the left image frame and the right image frame are alternately displayed on the display unit 130 in the vertical synchronization range.

The display unit 130, may be configured, for example, as a liquid crystal display (LCD) and display an image signal processed by the image processor 120 as an image, but is not limited thereto, and equivalent structures as would be understood by those skilled in the art may be substituted therefor, without departing from the scope of the invention. The display unit 130 may display an image frame by vertically arranging a plurality of horizontal scan lines scanned by the image processor 120.

The communication unit 140 transmits a synchronization signal transmitted from the synchronization signal processor 150 to the shutter glasses 200. The communication unit 140 may use various methods, for example but not by way of limitation, using infrared or visible rays, in the transmission of the synchronization signal.

The synchronization signal processor 150 generates a synchronization signal synchronized with a display timing of a 3D image displayed on the display unit 130 and transmits the signal to the communication unit 140. The synchronization signal processor 150 forms a noise code (e.g., predesignated) corresponding to a vertical synchronization range in the generation of the synchronization signal. The synchronization signal processor 150 will be further described below.

Hereinafter, components of the shutter glasses 200 are described.

The signal receiver 210 corresponds to a communication standard of the communication unit 140, receives a synchronization signal transmitted from the communication unit 140 and transmits the signal to the synchronization signal reconstruction unit 240.

The left lens 220 and the right lens 230 selectively perform light transmission or light blocking based on control of the shutter driver 250. When the left lens 220 and the right lens 230 selectively perform light transmission or light blocking with respect to left and right eyes of the user, the user may respectively perceive a left image frame and a right image frame displayed on the display unit 130 through the left and right eyes.

The left lens 220 and the right lens 230 may be configured as a liquid crystal lens (but are not limited thereto), which blocks light transmission when voltage is applied from the shutter driver 250 and allows light transmission when voltage is not applied. However, the above-disclosed liquid crystal lens is just an illustrative example, and the left lens 220 and the right lens 230 may allow light transmission when voltage is applied and may block light transmission when voltage is not applied. Further, the left lens 220 and the right lens 230 may have different light transmittances based on a level of applied voltage.

The synchronization signal reconstruction unit 240 has a noise code (e.g., predesignated), and the noise code is substantially the same as a noise code applied when the synchronization signal processor 150 generates a synchronization signal. The synchronization signal reconstruction unit 240 reconstructs a vertical synchronization range with respect to a synchronization signal received from the signal receiver 210 based on the noise code. The synchronization signal reconstruction unit 240 transmits the reconstructed synchronization signal to the shutter driver 250.

The shutter driver 250 selectively applies voltage to the left lens 220 and the right lens 230 based on a synchronization signal transmitted from the synchronization signal reconstruction unit 240, so that selective light transmission is performed. For example, the shutter driver 250 transmits light to the left lens 220 and blocks light to the right lens 230 in a vertical synchronization range where a left image frame is displayed. The shutter driver 250 blocks light to the left lens 220 and transmits light to the right lens 230 in a vertical synchronization range where a right image frame is displayed. The shutter driver 250 blocks light to the left lens 220 and the right lens 230 while an image frame is scanned to the display unit 130.

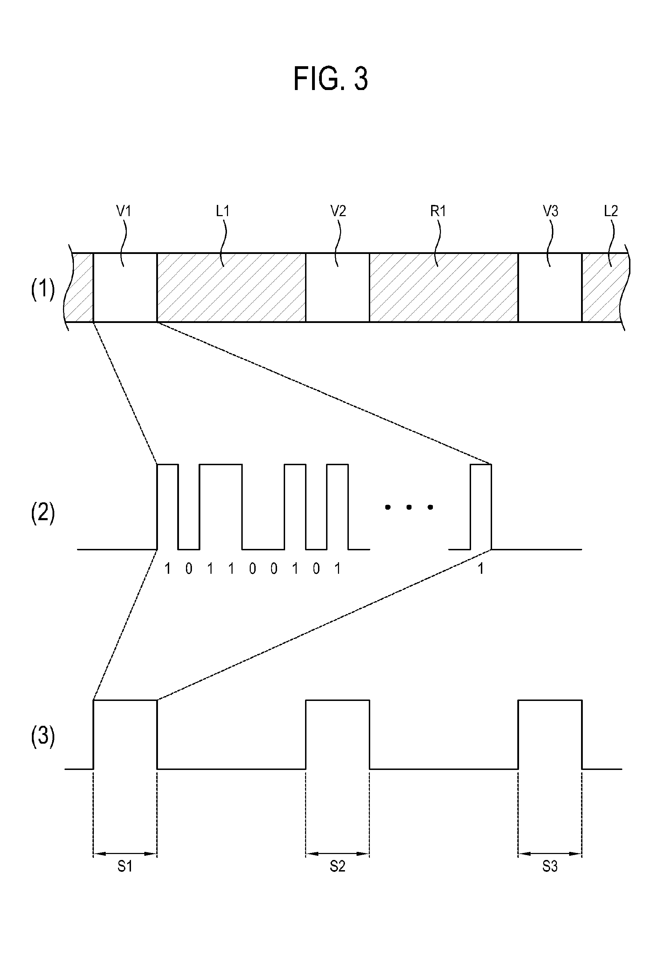

Hereinafter, a method of the synchronization signal processor 150 generating a synchronization signal and a method of the synchronization signal reconstruction unit 240 reconstructing a vertical synchronization range of a synchronization signal are described with reference to FIG. 3. FIG. 3 illustrates generation and reconstruction of a synchronization signal based on a noise code (e.g., predesignated).

Part (1) of FIG. 3 shows a chronological change of a 3D image frame displayed on the display unit 130. Ranges V1, L1, V2, R1, V3, and L2 sequentially occur over time.

Ranges L1 and L2 are ranges where a left image frame is scanned to the display unit 130, and a range R1 is a range where a right image frame is scanned to the display unit 130. There are vertical synchronization ranges V1, V2, and V3 between the ranges L1, R1, and L2 where the respective image frames are scanned. The vertical synchronization ranges V1, V2, and V3 are ranges where the left image frame or the right image frame scanned in the previous ranges L1, R1, and L2 is being displayed on the display unit 130.

That is, the vertical synchronization ranges V1, V2, and V3 are ranges where an image frame is not scanned but displayed on the display unit 130. For example, the left image frame scanned in the range L1 is displayed in a range V2, and the right image frame scanned in the range R1 is displayed in a range V3.

The synchronization signal processor 150 generates a synchronization signal representing the vertical synchronization ranges V1, V2, and V3 corresponding to an image signal.

Part (2) of FIG. 3 illustrates the range V1 in the synchronization signal generated by the synchronization signal processor 150. The following description may be applied to the other vertical synchronization ranges V2 and V3, and thus description thereof will be omitted.

The synchronization signal processor 150 has a noise code having orthogonality and having a pattern (e.g., preset repeated). Here, a code having orthogonality denotes that the code has independency as compared with other codes so that the original code may be easily separated or reconstructed when the code is mixed with another code. That is, a code having excellent orthogonality may be easily reconstructed through filtering even though the code is mixed with another code.

A code has a plurality of characteristics to have orthogonality. When a code is formed of 0 and 1, or on and off, a preset pattern of 0 and 1 is repeated to have regularity, and a total number of 0 and a total number of 1 are formed in balance. That is, although a code is similar to noise, the code has a regular pattern inside to be distinguished from a different code. The noise code may include a pseudo-noise (PN) code.

When a preset noise code is provided, a range may be detected where the noise code is positioned from a signal due to the above-disclosed characteristics, which denotes that the noise code has a sharp autocorrelation. Further, although different noise from the noise code is mixed with the signal, the predesignated noise code is compared with the signal and may ease filtering of the noise, which denotes that the noise code has a low interrelation.

As described above, the synchronization signal processor 150 forms the noise code (e.g., predesignated) corresponding to the vertical synchronization ranges V1, V2, and V3 to generate the synchronization signal. Hereinafter, the synchronization signal generated by the synchronization signal processor 150 is referred to as a first synchronization signal, which is designated only to clarify the exemplary embodiment, but does not limit the scope of the exemplary embodiments.

When the first synchronization signal generated by the synchronization signal processor 150 is received by the signal receiver 210 of the shutter glasses 200 through the communication unit 140, the signal receiver 210 transmits the first synchronization signal to the synchronization signal reconstruction unit 240. The synchronization signal reconstruction unit 240 reconstructs vertical synchronization ranges S1, S2, and S3 corresponding to the vertical synchronization ranges V1, V2, and V3 of the image signal in the first synchronization signal based on the noise code (e.g., predesignated) to generate a second synchronization signal, which is shown in part (3) of FIG. 3.

The synchronization signal reconstruction unit 240 analyzes a correlation of the first synchronization signal with the noise code (e.g., predesignated) and determines, based on a result of the analysis, a range of the first synchronization signal where a noise code is formed as the vertical synchronization ranges S1, S2, and S3. The correlation analysis refers to a statistical analysis method to analyze an interrelation or a similarity between two codes to be compared, that is a correlation. The correlation analysis is a known statistical analysis scheme in the related art, and is not described in detail in the present exemplary embodiment.

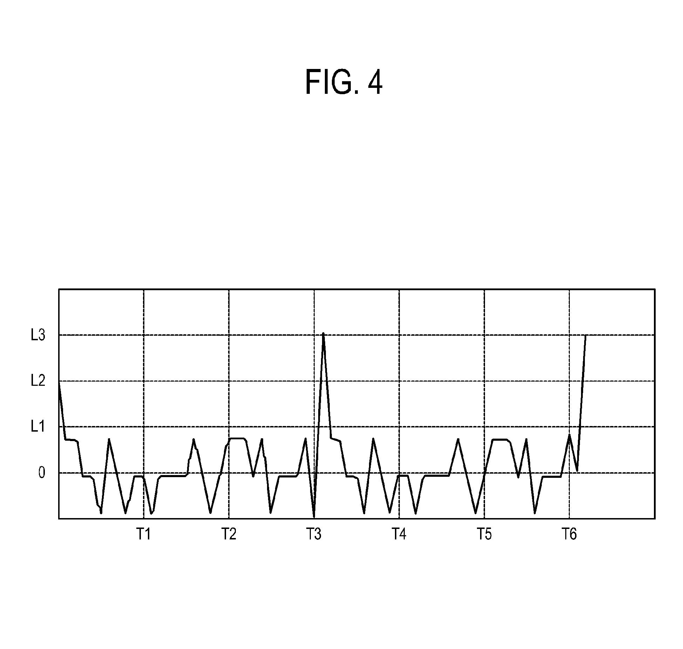

The synchronization signal reconstruction unit 240 detects a range the same as or similar to the noise code (e.g., predesignated) among a chronological range of the first synchronization signal based on the result of the correlation analysis to generate the second synchronization signal. A method of generating the second synchronization signal is described with reference to FIG. 4.

FIG. 4 is a graph illustrating an example the analysis result of the correlation of the first synchronization signal by the synchronization signal reconstruction unit 240.

In FIG. 4, a horizontal axis represents time, and a vertical axis represents a correlation level between the first synchronization signal and the noise code (e.g., predesignated). A higher correlation level denotes a higher similarity or a higher correlation. The horizontal axis and the vertical axis represent values for relative comparison and do not have a unit. In the present exemplary embodiment, the predesignated noise code uses a PN63 code, one of PN codes, which is only an illustrative example. The noise code may be modified.

As shown in the graph of FIG. 4, a correlation level between the first synchronization signal and the PN63 code changes over time from T1 to T6. The correlation level changes around 0 near times T1, T2, T4, and T5, while the correlation level dramatically increases up to a level L3 near times T3 and T6.

The above-discussed result denotes that the first synchronization signal includes the same code or a similar code as or to the PN63 code near the times T3 and T6, and the first synchronization signal does not include the same code or a similar code as or to the PN63 code in a range other than the times T3 and T6. That is, the PN63 code is a noise code having orthogonality, and thus the result shown in the graph of FIG. 4 is obtained due to a sharp autocorrelation and a low interrelation.

Based on the foregoing result, the synchronization signal reconstruction unit 240 determines whether a correlation level between a range of the first synchronization signal and the PN63 code, that is, a correlation between the range of the first synchronization signal and the PN63 code, is a level, for example, a level L1, or more. When the range is the level L1 or more, the synchronization signal reconstruction unit 240 determines the range as a vertical synchronization range.

Further, the synchronization signal reconstruction unit 240 adjusts a timing of a vertical synchronization range in view of a timing delay based on a correlation analysis to generate a second synchronization signal as shown in part (3) of FIG. 3. The synchronization signal reconstruction unit 240 transmits the second synchronization signal to the shutter driver 250.

There may be a high risk of mixing noise generated by the surroundings into the first synchronization signal while the first synchronization signal is transmitted from the display apparatus 100 to the shutter glasses 200. For example, when the first synchronization signal is transmitted based on infrared communication, unintended noise may be mixed into the first synchronization signal due to interference by a remote controller of a different device using infrared rays.

Thus, in the present exemplary embodiment, a noise code (e.g., predesignated) having orthogonality is shared by the display apparatus 100 and the shutter glasses 200, and a vertical synchronization range is generated and reconstructed based on the noise code. Accordingly, the noise mixed into the first synchronization signal is filtered to distinguish the vertical synchronization range, thereby preventing malfunction of the shutter glasses 200.

In the present exemplary embodiment, a noise code includes, but is not limited to, a predesignated noise code in the display apparatus 100 and the shutter glasses 200, respectively.

For example, a noise code is stored in the display apparatus 100, and the display apparatus 100 transmits the noise code to the shutter glasses 200 prior to transmission of the first synchronization signal.

When a code is received from the display apparatus 100, the shutter glasses 200 perform a pattern analysis using an algorithm (e.g., preset). When the code is determined as a predesignated noised code from the display apparatus 100, the shutter glasses 200 store the code. When the first synchronization signal is received from the display apparatus 100, the shutter glasses 200 perform a correlation analysis based on the stored noise code.

According to the above-disclosed process, noise mixed during transmission of a synchronization signal is easily filtered to distinguish a vertical synchronization range.

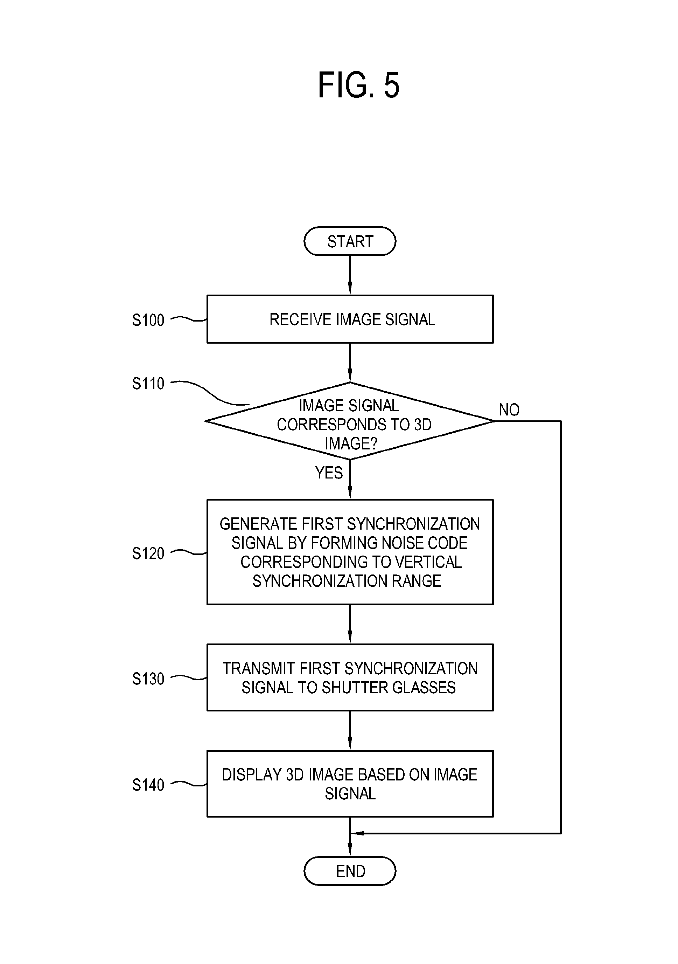

Hereinafter, a method of controlling the display apparatus 100 according to the present exemplary embodiment is described with reference to FIG. 5. FIG. 5 is a flowchart illustrating the method. When the image receiver 110 receives an image signal (S100), the image processor 120 determines whether the image signal corresponds to a 3D image (S110).

When the image signal corresponds to the 3D image, the synchronization signal processor 150 forms a noise code (e.g., predesignated) corresponding to a vertical synchronization range to generate a first synchronization signal (S120). The communication unit 140 transmits the generated first synchronization signal to the shutter glasses (S130).

The image processor 120 displays the 3D image on the display unit 130 based on the image signal (S140).

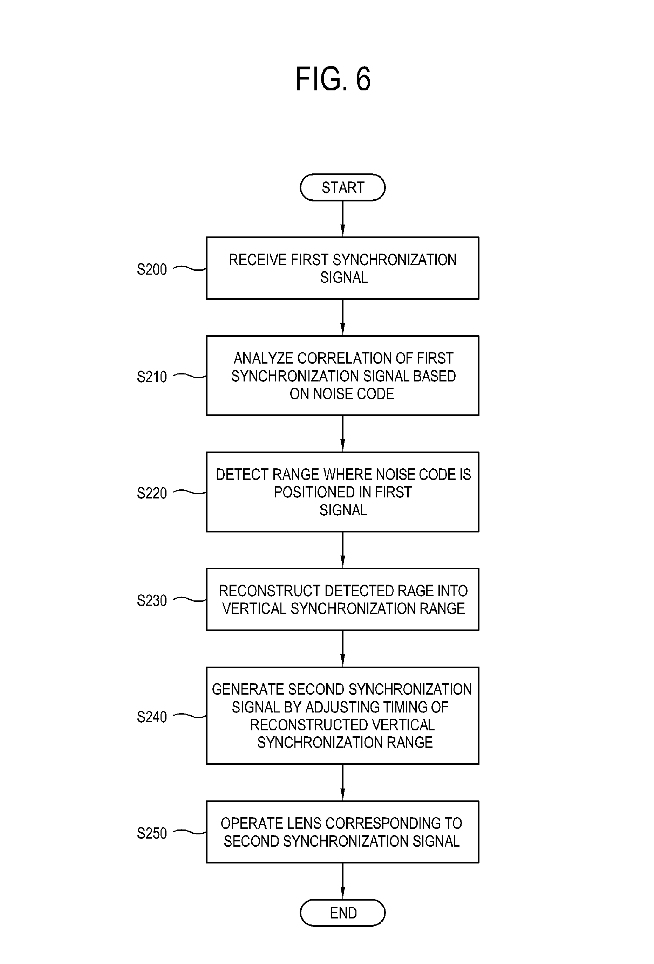

Hereinafter, a method of controlling the shutter glasses 200 according to an exemplary embodiment is described with reference to FIG. 6. FIG. 6 is a flowchart illustrating the method. When the signal receiver 210 receives a first synchronization signal (S200), the synchronization signal reconstruction unit 240 performs a correlation analysis on the first synchronization signal based on a noise code (e.g., predesignated) (S210).

As a result of the correlation analysis, the synchronization signal reconstruction unit 240 detects a range where the noise code (e.g., predesignated) is positioned in the synchronization signal (S220), and reconstructs the detected range into a vertical synchronization range (S230). The synchronization signal reconstruction unit 240 adjusts a timing of the reconstructed vertical synchronization range to generate and to transmit a second synchronization signal to the shutter driver 250 (S240).

The shutter driver 250 drives the left lens 220 and the right lens 230 corresponding to the second synchronization signal (S250).

The above-described exemplary embodiments (e.g., the methods illustrated in FIGS. 5 and 6) can also be embodied as computer readable codes which are stored on a computer readable recording medium (for example, non-transitory, or transitory) and executed by a computer or processor. The computer readable recording medium is any data storage device that can store data which can be thereafter read by a computer system.

Examples of the computer readable recording medium include read-only memory (ROM), random-access memory (RAM), CD-ROMs, magnetic tapes, floppy disks, optical data storage devices, and carrier waves such as data transmission through the Internet. The computer readable recording medium can also be distributed over network coupled computer systems so that the computer readable code is stored and executed in a distributed fashion.

Also, functional programs, codes, and code segments for accomplishing the embodiments can be easily construed by programmers skilled in the art to which the disclosure pertains. A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Shutter glasses to communicate with a display apparatus displaying a three-dimensional (3D) image, the shutter glasses comprising:
a lens which transmit light selectively;
a signal receiver which receives a first signal;
a synchronization signal reconstruction unit which reconstructs a synchronization signal corresponding to a 3D display of the display apparatus through a correlation analysis on the received first signal; and
a shutter driver which operates the lens based on the synchronization signal reconstructed by the synchronization signal reconstruction unit.

2. The shutter glasses of claim 1, wherein the first signal is a code signal having orthogonality.

3. The shutter glasses of claim 2, wherein the first signal is a pseudo-noise (PN) code signal.

4. The shutter glasses of claim 1, wherein the first signal is an infrared signal.

5. A display apparatus comprising:
an image receiver which receives an image signal corresponding to a three-dimensional (3D) image;
an image processor which processes the image signal so that an image is displayed on a display unit;
a communication unit which communicates with shutter glasses to operate based on the displayed image; and
a synchronization signal processor which converts a synchronization signal based on a 3D display into a code signal having orthogonality and transmits the code signal to the communication unit.

6. The display apparatus of claim 5, wherein the code signal is a pseudo-noise (PN) code signal.

7. The display apparatus of claim 5, wherein the communication unit communicates with the shutter glasses using an infrared signal.

8. A method of controlling a display apparatus comprising:
receiving an image signal corresponding to a three-dimensional (3D) image;
displaying an image based on the received image signal;
generating a synchronization signal in which a noise code having a pattern and orthogonality is formed corresponding to a vertical synchronization range of the image signal; and
transmitting the synchronization signal to a viewing apparatus so that the viewing apparatus reconstructs the vertical synchronization range in the synchronization signal range based on the noise code, the shutter glasses operating based on the displayed image.

9. The method of claim 8, wherein the noise code comprises a pseudo-noise (PN) code.

10. A method of controlling shutter glasses which communicates with a display apparatus to display a three-dimensional (3D) image and comprises a lens configured to transmit light selectively corresponding to the 3D image, the method comprising:
predesignating a noise code having a pattern and orthogonality;
receiving, from the display apparatus, a synchronization signal in which the noise code is formed in a vertical synchronization range of the displayed image, and reconstructing the vertical synchronization range in the received synchronization signal based on the noise code; and
operating the lens based on the vertical synchronization range reconstructed synchronization signal.

11. The method of claim 10, wherein the noise code comprises a pseudo-noise (PN) code.

12. The method of claim 10, wherein the reconstructing comprises performing an analysis of a correlation between the synchronization signal and the noise code, and determining a range where the noise code is formed as the vertical synchronization range based on a result of the analysis.

13. The method of claim 12, wherein the determining comprises determining a range of the synchronization signal as the vertical synchronization range when a correlation of the range and the noise code is at least a preset level.
